# EUROPEAN PATENT APPLICATION

(11) **EP 4 694 165 A1**
(43) Date of publication of application: **11.02.2026**
(21) Application number: 24797442.1
(22) Date of filing: 25.04.2024
(51) Int. Cl.: H04N 23/661, H04N 23/611, H04N 23/63, H04N 23/73, H04N 23/71, H04N 23/67, H04N 23/68, H04N 23/57, H04M 1/02

(54) **METHOD AND ELECTRONIC DEVICE FOR REQUESTING REMOTE CONTROL OF CAMERA**

(30) Priority: 25.04.2023 KR 20230054315; 13.06.2023 KR 20230075670
(71) Applicant: Samsung Electronics Co., Ltd., Suwon-si, Gyeonggi-do 16677 (KR)
(72) Inventor: KIM, Jaechul, Suwon-si Gyeonggi-do 16677 (KR); PARK, Kyoungkeun, Suwon-si Gyeonggi-do 16677 (KR); PARK, Jiyoon, Suwon-si Gyeonggi-do 16677 (KR); LEE, Taeho, Suwon-si Gyeonggi-do 16677 (KR)
(74) Representative: Gulde & Partner
(86) International application number: PCT/KR2024/005628
(87) International publication number: WO 2024/225788

(57) **Abstract**

A method and electronic device for requesting remote control of a camera are provided. A method in which an electronic device requests an external electronic device to perform remote control for image capturing may include: executing a camera application for capturing by using at least one camera of the electronic device; upon the camera application being executed, identifying a folding state of the electronic device, the folding state including a folding angle when the electronic device is in a folded state; and upon the folding angle falling within a predetermined range, requesting the external electronic device to remotely control the camera of the electronic device.

## Description

### [Technical Field]

The disclosure relates to a method and electronic device for requesting remote control of a camera.

### [Background Art]

With the advancement of multimedia and network technologies, users have been able to receive various services by utilizing multiple devices. Furthermore, when the user intends to perform photographing using an electronic device including a camera, the photographing is now enabled to be controlled by utilizing a different electronic device configured to remotely control the electronic device. However, there has been inconvenience in that the user needs to configure the electronic device and the different electronic device in a complex manner in order to remotely control the camera of the electronic device. Moreover, even if a function for photographing is enabled in the electronic device, when the user is located at a distance where the electronic device is not manipulatable, there has been a problem in that it is difficult to initiate remote control of the camera of the electronic device by using the different electronic device.

### [Disclosure]

### [Technical Solution]

As a technical means for solving the aforementioned technical problem, according to an embodiment, there may be provided a method in which an electronic device requests an external electronic device to perform remote control for image capturing. The method may include: executing a camera application for capturing by using at least one camera of the electronic device; upon the camera application being executed, identifying a folding state of the electronic device, the folding state including a folding angle when the electronic device is in a folded state; and upon the folding angle falling within a predetermined range, requesting the external electronic device to remotely control the camera of the electronic device.

According to an embodiment, there may be provided an electronic device including: a communication interface; at least one camera; a memory which stores instructions; and a processor which executes the instructions. The processor may be configured, by executing the instructions, to: execute a camera application for capturing by using the at least one camera; upon the camera application being executed, identify a folding state of the electronic device, the folding state including a folding angle when the electronic device is in a folded state; and upon the folding angle falling within a predetermined range so that the folding state satisfies a pre-set condition, request the external electronic device to remotely control the camera of the electronic device.

According to an embodiment, there may be provided a computer-readable recording medium storing a program for executing a method including: executing a camera application for capturing by using at least one camera of the electronic device; upon the camera application being executed, identifying a folding state of the electronic device, the folding state including a folding angle when the electronic device is in a folded state; and upon the folding angle falling within a predetermined range, requesting the external electronic device to remotely control the camera of the electronic device.

### [Description of Drawings]

FIG. 1 illustrates an overview of an electronic device according to an embodiment, which requests a remote capturing from an external electronic device;
FIG. 2 is a flowchart of a method in which an electronic device according to an embodiment of the disclosure requests an external electronic device to perform remote control;
FIG. 3 is a flowchart of a method for determining whether an electronic device according to an embodiment of the disclosure requests remote control of a camera;
FIG. 4A illustrates an example in which an electronic device according to an embodiment of the disclosure is placed on a surface in a state of being folded in an acute angle, when the electronic device is a foldable electronic device;
FIG. 4B illustrates an example in which an electronic device according to an embodiment of the disclosure is placed on a surface in a state of being folded in an acute angle, when the electronic device is a foldable electronic device;
FIG. 5 illustrates an example in which an electronic device requests an external electronic device to remotely control a camera by considering various situations according to an embodiment of the disclosure;
FIG. 6 is a flowchart illustrating a method in which an electronic device according to an embodiment of the disclosure transmits a determined type of data to request an external electronic device to remotely control a camera;
FIG. 7A illustrates an example in which an electronic device according to an embodiment of the disclosure transmits a text-format message, thereby causing a notification related to remote control of a camera to be displayed on an external electronic device;
FIG. 7B illustrates an example in which an electronic device according to an embodiment of the disclosure transmits an execution command of an application for remote control of a camera, thereby causing a notification related to the remote control of the camera to be displayed on an external electronic device;
FIG. 7C illustrates an example in which an electronic device according to an embodiment of the disclosure transmits a preview image, thereby causing a notification regarding remote control of a camera to be displayed on an external electronic device;
FIG. 8 is a flowchart of a method in which an electronic device according to an embodiment of the disclosure receives illuminance information from an external electronic device to adjust an exposure level of a camera;
FIG. 9 is a flowchart of a method in which an electronic device according to an embodiment of the disclosure changes a focus distance for capturing, based on a distance to an external electronic device;
FIG. 10 is a flowchart of operations performed between an electronic device according to an embodiment of the disclosure and an external electronic device to remotely control a camera of the electronic device; and
FIG. 11 is a block diagram of an electronic device 1101 in a network environment 1100, according to various embodiments.

### [Mode for Invention]

Hereinafter, embodiments of the disclosure will be described in detail with reference to the accompanying drawings so that those skilled in the art can easily implement the disclosure. However, the disclosure may be realized in various different forms and is not limited to the embodiments described herein. In addition, in order to clearly describe the disclosure, parts not related to the description are omitted in the drawings, and similar reference numerals are given to similar parts throughout the specification.

Terms used in the disclosure are described as general terms currently in use in consideration of functions mentioned in the disclosure, but may mean various other terms depending on the intention of a technician engaged in the relevant field, precedents, emergence of new technologies, or the like. Therefore, the terms used in the disclosure shall not be interpreted only based on the name of the term, but shall be interpreted based on the meaning of the term and the overall content of the disclosure.

In addition, the terms '1st', '2nd', or the like may be used to describe various components, but the components shall not be limited by these terms. The terms are used to distinguish one component from another.

Throughout the specification, when a part is mentioned to be "connected" to another part, this includes not only a case where it is "directly connected" but also a case where it is "electrically connected" thereto with other elements interposed therebetween. Also, when a part is mentioned to "include" a component, this does not mean that it excludes other components, but rather that it may further include other components, unless otherwise specified.

Phrases such as "in an embodiment" mentioned in various sections of the disclosure do not necessarily all refer to the same embodiment.

An embodiment of the disclosure may be represented by functional block configurations and various processing steps. Some or all of these functional blocks may be implemented as various hardware and/or software components which perform specific functions. For example, the functional blocks of the disclosure may be implemented by one or more microprocessors, or may be implemented by circuit configurations designed for specific functions. Further, for example, the functional blocks of the disclosure may be implemented as various programming or scripting languages. The functional blocks may also be implemented as algorithms executed on one or more processors. Furthermore, the disclosure may employ the prior art for electronic environment configurations, signal processing, and/or data processing. Terms such as "mechanism," "element," "means," and "configuration" are used broadly herein, and are not limited to mechanical or physical configurations.

In addition, connecting lines or connecting members between components shown in the drawings are provided merely as examples of functional connections and/or physical or circuit connections. In actual devices, the connections between the components may be implemented by various alternative or additional functional, physical, or circuit connections.

Hereinafter, the disclosure will be described in detail with reference to the accompanying drawings.

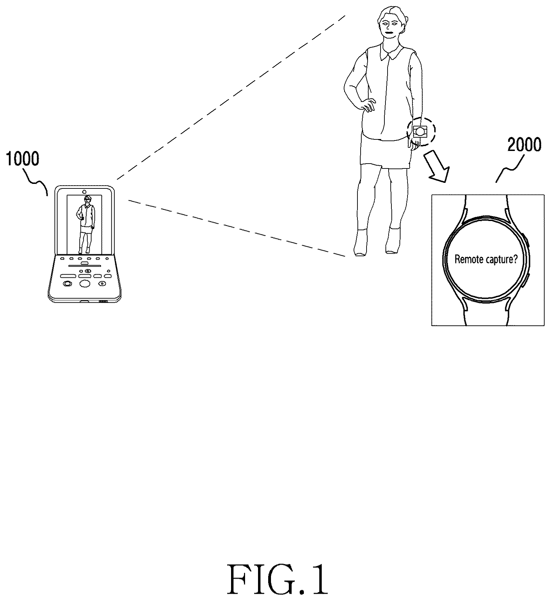

FIG. 1 illustrates an overview of an electronic device according to an embodiment, which requests a remote capturing from an external electronic device.

Referring to FIG. 1, upon determining that it is a situation where remote control is required for a camera of an electronic device 1000, the electronic device 1000 may request an external electronic device 2000 to remotely control image capturing using the camera of the electronic device 1000. The electronic device 1000 may execute a camera application, and may determine whether it is a situation where a user of the electronic device 1000 intends to remotely control the camera of the electronic device 1000 by using the external electronic device 200, in consideration of a variety of information on whether the electronic device 1000 shakes and/or a distance between the electronic device 1000 and the external electronic device 2000, or the like.

Upon determining that it is the situation where the user of the electronic device 1000 intends to remotely control the camera of the electronic device 1000 by using the external electronic device 2000, the electronic device 1000 may push data to the external electronic device 2000 to request the remote control of the camera of the electronic device 1000.

Based on the remote control request from the electronic device, the external electronic device 2000 may execute an application for the remote control of the camera of the electronic device 1000, and may remotely control the camera of the electronic device 1000.

The electronic device 1000 is a device including a camera, and may be, for example, a smartphone, a tablet Personal Computer (PC), a mobile phone, a Personal Digital Assistant (PDA), a laptop, a media player, a Global Positioning System (GPS) device, an e-book reader, a digital broadcasting terminal, a navigation device, a digital camera, a home appliance, or other mobile computing devices, but is not limited thereto.

The external electronic device 2000 is a device capable of communicating with the electronic device 1000 and transmitting control commands to the electronic device 1000, and may be, for example, a smartphone, a tablet PC, a mobile phone, a PDA, a laptop, a media player, a GPS device, an e-book reader, a digital broadcasting terminal, a navigation device, a digital camera, a home appliance, or other mobile computing devices, but is not limited thereto.

For example, the external electronic device 2000 may be a foldable device which is foldable by a hinge. For example, the external electronic device 2000 may be a wearable electronic device worn by the user, such as a smartwatch, smart glasses, a headset device, or smart clothing.

The electronic device 1000 and the external electronic device 2000 may be communicatively coupled to each other through a network. The network may be implemented as any wired network such as a Local Area Network (LAN), a Wide Area Network (WAN), or a Value Added Network (VAN), or any wireless network such as a mobile radio communication network or a satellite communication network. In addition, the network may include a mutual combination of at least two of the LAN, the WAN, the VAN, the mobile radio communication network, and the satellite communication network, and is a comprehensive data communication network enabling seamless communication among each network entity illustrated in FIG. 1, including a wired internet, a wireless internet, and a mobile wireless communication network. The wireless communication may include, for example, wireless LAN (Wi-Fi), Bluetooth, Bluetooth low energy, ZigBee, Wi-Fi Direct (WFD), Ultra-WideBand (UWB), Infrared Data Association (IrDA), Near Field Communication (NFC), or the like, but is not limited thereto.

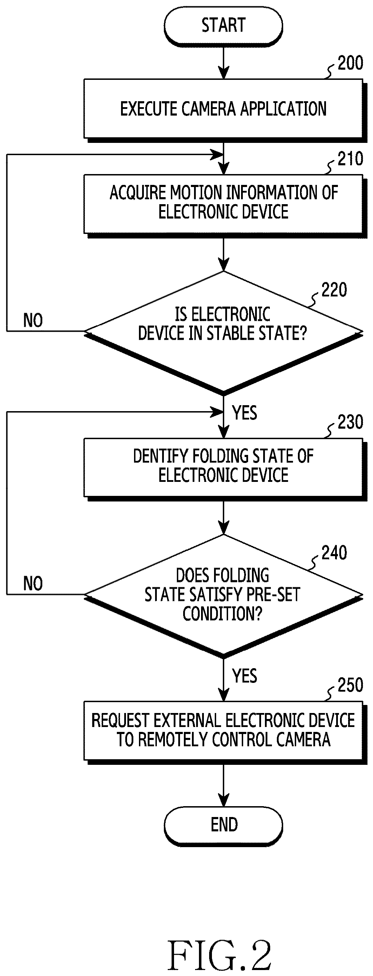

FIG. 2 is a flowchart of a method in which an electronic device according to an embodiment of the disclosure requests an external electronic device to perform remote control.

In operation 200, the electronic device 1000 may execute a camera application. The electronic device 1000 may receive a user input for executing the camera application from a user, and may execute the camera application in response to the user input. The camera application may be an application which provides a function of capturing a subject by using at least one camera of the electronic device 1000.

In operation 210, the electronic device 1000 may acquire motion information. The electronic device 1000 may acquire motion information related to a motion of the electronic device 1000, which is detected from a motion sensor in the electronic device 1000. The motion sensor may include, for example, an accelerometer, a gyro sensor, and a geomagnetic sensor, but is not limited thereto.

In operation 220, the electronic device 1000 may determine whether the electronic device 1000 is in a stable state. The electronic device 1000 may determine whether a shaking state of the electronic device 1000 is the stable state. The shaking state of the electronic device 1000 may refer to a state of the electronic device 1000 as to whether the electronic device 1000 is shaking. In addition, a state in which the electronic device 1000 is not moving and not shaking may be the stable state. For example, when the electronic device 1000 is placed on a surface and not moving, the shaking state of the electronic device 1000 may be determined to be the stable state. For example, when the electronic device 1000 is fixed to a stationary device, such as a tripod, and thus does not move, the shaking state of the electronic device 1000 may be determined to be the stable state. For example, when the electronic device 1000 is mounted on a cradle and thus does not move, the shaking state of the electronic device 1000 may be determined to be the stable state.

If it is determined that the shaking state of the electronic device 1000 is not the stable state, the electronic device 1000 may perform the operation 210.

If it is determined that the shaking state of the electronic device 1000 is the stable state, in operation 230, the electronic device 1000 may identify a folding state of the electronic device 1000. According to an embodiment, the electronic device 1000 may identify whether the electronic device 1000 is folded. According to an embodiment, a folding angle of the electronic device 1000 may be identified. The folding angle may refer to a degree to which a foldable electronic device is folded by a hinge. For example, the electronic device 1000 may identify the folding angle representing the degree to which the electronic device 1000 is folded by using at least one sensor in the electronic device 1000. When the user places the electronic device 1000 on a surface to capturing by using the camera of the electronic device 1000, the folding angle of the electronic device 1000 may be within a predetermined range. Whether the folding angle is within the predetermined range may be used by the electronic device 1000 to determine whether the user intends to remote capturing by using the camera of the electronic device 1000.

In operation 240, the electronic device 1000 may determine whether the folding state of the electronic device 1000 satisfies a pre-set condition. For example, it may be determined whether the folding state of the electronic device 1000 satisfies the pre-set condition, based on the folding angle of the electronic device 1000. For example, when the folding angle of the electronic device 1000 is within a predetermined angular range, it may be determined that the folding state of the electronic device 1000 satisfies the pre-set condition. For example, when the camera of the electronic device 1000 does not face the sky or the ground but is oriented within the predetermined angular range from a horizontal direction, it may be determined that the folding state of the electronic device 1000 satisfies the pre-set condition. For example, when the electronic device 1000 is placed vertically or horizontally in the folded state, it may be determined that the folding state of the electronic device 1000 satisfies the pre-set condition.

According to an embodiment, based on a sensing value detected by at least one sensor in the electronic device 1000, the electronic device 1000 may determine at least one of a folding angle of the electronic device 1000, a direction in which the camera of the electronic device 1000 is oriented, or an angle at which the electronic device 1000 stands upright. In addition, based on at least one of the folding angle of the electronic device 1000, the direction in which the camera of the electronic device 1000 is oriented, and the angle at which the electronic device 1000 stands upright, it may be determined whether the folding state of the electronic device 1000 satisfies the pre-set condition.

It has been described above that the operation 230 is performed when the electronic device 1000 is in the stable state, but the disclosure is not limited thereto. According to an embodiment, the operation 230 may be performed without determining whether the electronic device 1000 is in the stable state. The operations for determining whether the electronic device 1000 is in the stable state may be omitted.

If the folding state does not satisfy the pre-set condition, the electronic device 1000 may perform the operation 230.

If the folding state satisfies the pre-set condition, in operation 250, the electronic device 1000 may request the external electronic device 2000 to remotely control the camera. The electronic device 1000 may push a notification requesting the remote control of the camera to the external electronic device 2000. The electronic device 1000 may transmit to the external electronic device 2000, for example, a message requesting the remote control of the camera. The electronic device 1000 may transmit to the external electronic device 2000, for example, a preview image acquired using the camera. The electronic device 1000 may transmit to the external electronic device 2000, for example, a command for executing an application for the remote control of the camera in the external electronic device 2000.

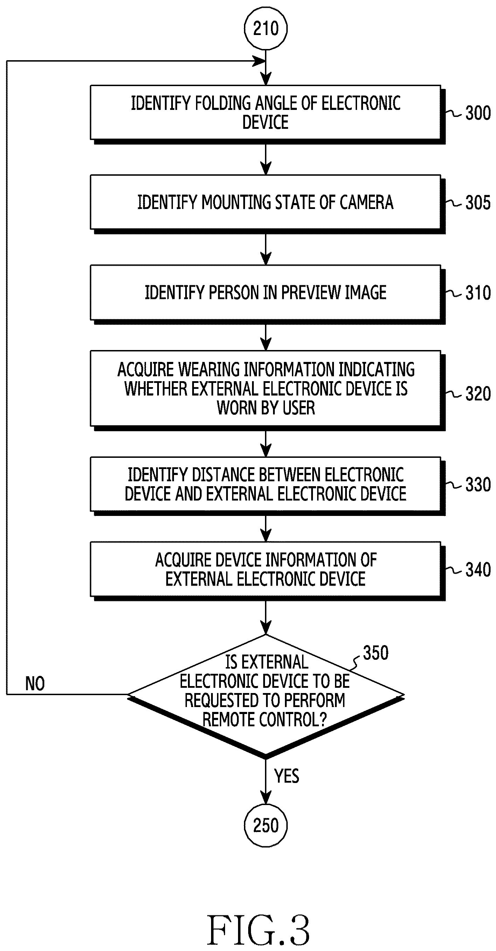

FIG. 3 is a flowchart of a method for determining whether an electronic device according to an embodiment of the disclosure requests remote control of a camera.

In operation 300, the electronic device 1000 may identify a folding angle of the electronic device 1000. In this case, the electronic device 1000 may be a foldable electronic device, and the folding angle may indicate a degree to which the foldable electronic device is folded by a hinge. For example, the electronic device 1000 may identify the folding angle, which represents the degree to which the electronic device 1000 is folded, by using at least one sensor in the electronic device 1000. The operation 300 may be performed after the operation 210 of FIG. 2.

When a user places the electronic device 1000 on a surface for capturing by using the camera of the electronic device 1000, the folding angle of the electronic device 1000 may be within a predetermined range. Whether the folding angle is within the predetermined range may be used by the electronic device 1000 to determine whether the user intends to perform the remote capturing by using the camera of the electronic device 1000.

In operation 305, the electronic device 1000 may identify a mounting state of the electronic device 1000. The electronic device 1000 may identify information on an angle at which the electronic device 1000 is mounted. The information on the angle at which the electronic device 1000 is mounted may be used to identify a direction in which the camera of the electronic device 1000 is oriented in a state where the electronic device 1000 is mounted. For example, when the camera of the electronic device 1000 does not face the sky or the ground but is oriented within a predetermined angular range from a horizontal direction, it may be determined that the mounting state of the electronic device 1000 satisfies a pre-set condition. For example, when the electronic device 1000 is placed vertically or horizontally, it may be determined that the mounting state of the electronic device 1000 satisfies the pre-set condition.

In operation 310, the electronic device 1000 may identify a person in a preview image.

The electronic device 1000 may acquire information on the person in the preview image through image analysis for the preview image. For example, the electronic device 1000 may identify the number of people in the preview image and a size of a region occupied by the person in the preview image. For example, the electronic device 1000 may acquire information on the person in the preview image by using an artificial intelligence model which is trained for identifying a person in an image and obtaining a variety of information on the person in the image, but the disclosure is not limited thereto.

The number of people in the preview image and the size of the region occupied by the person in the preview image may be used by the electronic device 1000 to determine whether the user intends to perform remote capture using the camera of the electronic device 1000.

In operation 320, the electronic device 1000 may acquire wearing information indicating whether the external electronic device 2000 is worn by the user. In this case, the external electronic device 2000 may be a wearable electronic device, and the external electronic device 2000 may determine whether the external electronic device 2000 is worn by the user by using a sensor in the external electronic device 2000. In addition, the external electronic device 2000 may produce the wearing information indicating whether the external electronic device 2000 is worn by the user.

Upon the camera application being executed, the electronic device 1000 may request the external electronic device 2000 to provide the wearing information, and may receive the wearing information from the external electronic device 2000. However, a timing at which the electronic device 1000 requests the external electronic device 2000 to provide the wearing information is not limited thereto.

When the external electronic device 2000, which is the wearable electronic device, is not worn by the user, it may be determined that the user does not intend to perform remote capture using the camera of the electronic device 1000. Accordingly, the wearing information indicating whether the external electronic device 2000 is worn by the user may be used by the electronic device 1000 to determine whether the user intends to perform the remote capture using the camera of the electronic device 1000.

In operation 330, the electronic device 1000 may identify a distance between the electronic device 1000 and the external electronic device 2000. The electronic device 1000 may be communicatively coupled to the external electronic device 2000 through short-range wireless communication, and the electronic device 1000 may measure strength of signals transmitted and received through the short-range wireless communication to identify the distance between the electronic device 1000 and the external electronic device 2000. For example, the electronic device 1000 may be coupled to the external electronic device 2000 through Bluetooth communication or Wi-Fi direct communication, and may identify the distance between the electronic device 1000 and the external electronic device 2000, based on signal strength of signals to be transmitted and received. In this case, for example, the electronic device 1000 may use a Received Signal Strength Indicator (RSSI) value to identify the distance between the electronic device 1000 and the external electronic device 2000. Alternatively, for example, the electronic device 1000 may use UWB communication technologies to identify the distance to the external electronic device 2000. In this case, for example, the electronic device 1000 may transmit and receive wideband signals to and from the external electronic device 2000 through UWB communication to identify the distance between the electronic device 1000 and the external electronic device 2000 by using distance measurement technologies based on a Time of Flight (ToF) scheme.

When the external electronic device 2000 and the electronic device 1000 are not coupled through the short-range communication, the electronic device 1000 may request the external electronic device 2000 to establish a short-range communication connection using other communication means. For example, when there is no Bluetooth communication connection between the external electronic device 2000 and the electronic device 1000, the electronic device 1000 may request the external electronic device 2000 to establish a Bluetooth communication connection through a mobile radio communication network.

When the user places the electronic device 1000 on a surface for capturing by using the camera of the electronic device 1000 and then moves away from the electronic device 1000 for remote capture, the distance between the electronic device 1000 and the external electronic device 2000 may exceed a predetermined threshold or may increase for a predetermined period of time. Accordingly, the distance between the electronic device 1000 and the external electronic device 2000 may be used by the electronic device 1000 to determine whether the user intends to perform the remote capture using the camera of the electronic device 1000.

According to an embodiment, the operation 330 in which the electronic device 1000 identifies the distance between the electronic device 1000 and the external electronic device 2000 may be omitted or optionally performed.

In operation 340, the electronic device 1000 may acquire device information of the external electronic device 2000. Upon the camera application being executed, the electronic device 1000 may request the external electronic device 2000 to provide the device information, and may receive the device information from the external electronic device 2000. However, a timing at which the electronic device 1000 requests the external electronic device 2000 to provide the wearing information is not limited thereto. The device information of the external electronic device 2000 may include, for example, a model name of the external electronic device 2000, an International Mobile Equipment Identity (IMEI) number, a manufacturer, an operating system, version information, screen resolution, and identification values of applications installed on the external electronic device 2000, but the disclosure is not limited thereto.

The device information of the external electronic device 2000 may be used by the electronic device 1000 to determine whether the external electronic device 2000 is able to perform a function for remotely controlling the camera of the electronic device 1000.

In operation 350, the electronic device 1000 may determine whether to request the external electronic device 2000 to perform the remote control.

The electronic device 1000 may determine whether to request the external electronic device 2000 to perform the remote control by using the information identified and acquired in the operations 300 to 340. The electronic device 1000 may determine whether to request the external electronic device 2000 to remotely control the camera, by considering the folding angle of the electronic device 1000, information on an identified person in a preview image, whether the external electronic device 2000 is worn by the user, a distance between the electronic device 1000 and the external electronic device 2000, and whether the external electronic device 2000 supports the remote control.

If it is determined in the operation 350 that the electronic device 1000 is to request the external electronic device 2000 to remotely control the camera, the electronic device 1000 may perform the operation 250.

If it is determined in the operation 350 that the electronic device 1000 is not to request the external electronic device 2000 to remotely control the camera, the electronic device 1000 may perform the operation 300. Alternatively, if it is determined that the electronic device 1000 is not to request the external electronic device 2000 to remotely control the camera, the electronic device 1000 may terminate the operations for the remote control of the camera. For example, if the electronic device 1000 determines not to request the external electronic device 2000 to remotely control the camera during a predetermined time range after the camera application is executed, the electronic device 1000 may terminate the operations for the remote control of the camera.

Meanwhile, although it is described in FIG. 3 that the electronic device 1000 determines whether to request the external electronic device 2000 to remotely control the camera by considering the folding angle of the electronic device 1000, the mounting state, the information on the identified person in the preview image, whether the external electronic device 2000 is worn by the user, the distance between the electronic device 1000 and the external electronic device 2000, and whether the external electronic device 2000 supports the remote control, the disclosure is not limited thereto. For example, the electronic device 1000 may determine whether to request the external electronic device 2000 to remotely control the camera without considering at least one of the folding angle of the electronic device 1000, the information on the identified person in the preview image, whether the external electronic device 2000 is worn by the user, the distance between the electronic device 1000 and the external electronic device 2000, and whether the external electronic device 2000 supports the remote control. When at least one of the folding angle of the electronic device 1000, the information on the identified person in the preview image, whether the external electronic device 2000 is worn by the user, the distance between the electronic device 1000 and the external electronic device 2000, and whether the external electronic device 2000 supports the remote control is not considered, at least one of the operations 300 to 340 may be omitted.

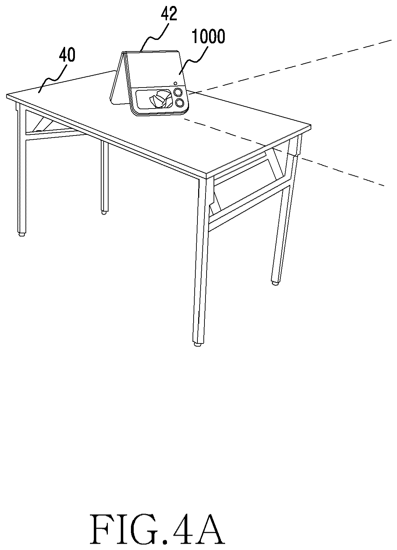

FIG. 4A illustrates an example in which an electronic device according to an embodiment of the disclosure is placed on a surface in a state of being folded in an acute angle, when the electronic device is a foldable electronic device.

Referring to FIG. 4A, the electronic device 1000 is the foldable electronic device and may be placed on a surface of a table 40 with a hinge portion 42 of the electronic device 1000 facing upward in the state of being folded in the acute angle. According to an embodiment, when a camera application in the electronic device 1000 is executed and the electronic device 1000 is in a folded state without shaking, the electronic device 1000 may identify a distance to the external electronic device 2000 to request remote control of the camera, or may request the external electronic device 2000 to remotely control the camera.

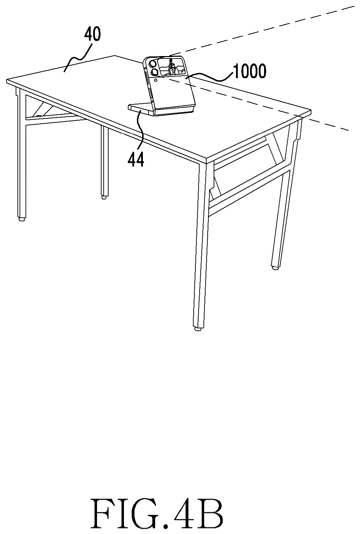

FIG. 4B illustrates an example in which an electronic device according to an embodiment of the disclosure is placed on a surface in a state of being folded in an acute angle, when the electronic device is a foldable electronic device.

Referring to FIG. 4B, the electronic device 1000 is the foldable electronic device and may be placed in a state of being folded such that a housing portion 44, on which a camera of the electronic device 1000 is not disposed, is placed on a surface of the table 40. According to an embodiment, when a camera application in the electronic device 1000 is executed and the electronic device 1000 is in a folded state without shaking, the electronic device 1000 may identify a distance to the external electronic device 2000 to request remote control of the camera, or may request the external electronic device 2000 to remotely control the camera.

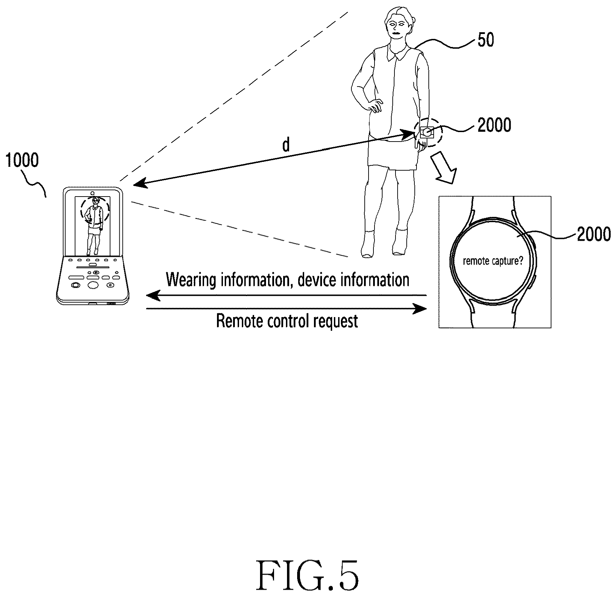

FIG. 5 illustrates an example in which an electronic device requests an external electronic device to remotely control a camera by considering various situations according to an embodiment of the disclosure.

Referring to FIG. 5, upon executing a camera application in the electronic device 1000, the electronic device 1000 may identify that a distance 'd' between the external electronic device 2000 and the electronic device 1000 is equal to or greater than a predetermined threshold, or that the distance increases for a predetermined period of time, based on signals transmitted and received through short-range communication with the external electronic device 2000. The electronic device 1000 may receive wearing information from the external electronic device 2000 and determine that the external electronic device 2000 is worn by a user 50. The electronic device 1000 may identify, based on device information received from the external electronic device 2000, that the external electronic device 2000 supports a function for remotely controlling the camera of the electronic device 1000. Thereafter, the electronic device 1000 may request the external electronic device 2000 to remotely control the camera.

It is illustrated in FIG. 5 that the external electronic device 2000 is a watch-type electronic device, but the type of the external electronic device 2000 is not limited thereto. For example, the external electronic device 2000 may be other wearable electronic devices such as a headset device, smart glasses, or smart clothing. For example, the external electronic device 2000 may be other mobile electronic devices such as a smartphone, a tablet PC, or a laptop.

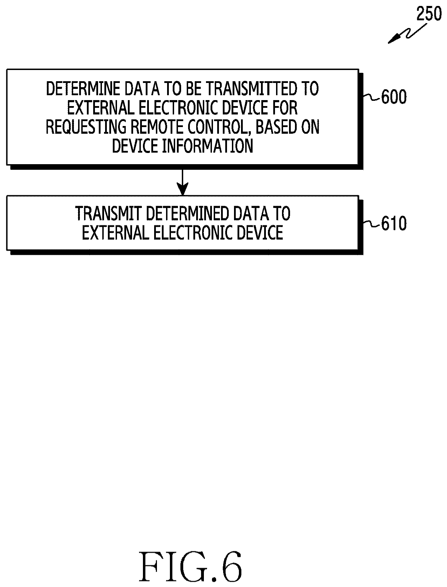

FIG. 6 is a flowchart illustrating a method in which an electronic device according to an embodiment of the disclosure transmits a determined type of data to request an external electronic device to remotely control a camera. Operations of FIG. 6 may correspond to the operation 250 of FIG. 2.

In operation 600, the electronic device 1000 may determine data to be transmitted to the external electronic device 2000 for requesting remote control, based on device information of the external electronic device 2000. The data to be transmitted to the external electronic device 2000 to request the remote control of the camera may include, for example, at least one of a text message, an execution command of an application for the remote control of the camera, and a preview image, but the disclosure is not limited thereto.

To determine the data, the electronic device 1000 may identify functions supported by the external electronic device 2000 related to the remote control of the camera of the electronic device 1000, based on the device information of the external electronic device 2000. For example, the electronic device 1000 may identify whether the external electronic device 2000 includes a display, whether an application capable of remotely controlling the camera of the electronic device 1000 is installed on the external electronic device 2000, and whether control permission of the electronic device 1000 is set for the application on the external electronic device 2000.

For example, when the external electronic device 2000 includes the display, the electronic device 1000 may determine a text-format notification message requesting the remote control of the camera as the data to be transmitted to the external electronic device 2000.

For example, when the external electronic device 2000 includes the display and a resolution of the display is equal to or greater than a pre-set threshold, the electronic device 1000 may determine a text-format notification message requesting the remote control of the camera and a preview image captured by the camera as the data to be transmitted to the external electronic device 2000.

For example, when the control permission of the external electronic device 1000 for the application in the external electronic device 2000 is set in the external electronic device 2000, the electronic device 1000 may determine an execution command for executing the application capable of remotely controlling the camera as the data to be transmitted to the external electronic device 2000.

In operation 610, the electronic device 1000 may transmit the determined data to the external electronic device 2000. The electronic device 1000 may push the data determined in the operation 600 to the external electronic device 2000. The data transmitted to the external electronic device 2000 may include at least one of a text-format message, an execution command of an application for the remote control of the camera, and a preview image, but the disclosure is not limited thereto.

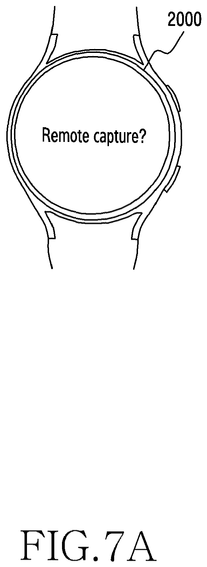

FIG. 7A illustrates an example in which an electronic device according to an embodiment of the disclosure transmits a text-format message, thereby causing a notification related to remote control of a camera to be displayed on an external electronic device.

Referring to FIG. 7A, the external electronic device 2000 may display, for example, a text-format notification message such as "Remote capture?". The electronic device 1000 may push text-format data requesting the remote control of the camera to the external electronic device 2000. In response to the remote control request from the electronic device 1000, the external electronic device 2000 may automatically display the pushed text-format data on a screen of the external electronic device 2000.

Alternatively, for example, the electronic device 1000 may request the external electronic device 2000 to perform the remote control by transmitting a signal in a predetermined format to the external electronic device 2000, and the external electronic device 2000 may display a notification pre-stored in the external electronic device 2000 on the screen of the external electronic device 2000.

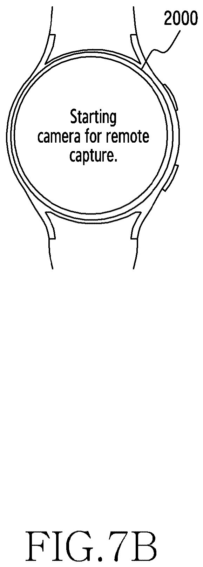

FIG. 7B illustrates an example in which an electronic device according to an embodiment of the disclosure transmits an execution command of an application for remote control of a camera, thereby causing a notification related to the remote control of the camera to be displayed on an external electronic device.

Referring to FIG. 7B, when the application for the remote control of the camera is installed on the external electronic device 2000 and the electronic device 1000 has control permission to manage the application installed on the external electronic device 2000, the external electronic device 2000 may execute the application for the remote control of the camera in response to an execution command from the electronic device 1000. For example, the external electronic device 2000 may immediately execute the application for the remote control of the camera without any separate user input according to the application execution command received from the electronic device 1000, and display a notification message "Starting camera for remote capture".

Alternatively, for example, according to the application execution command received from the electronic device 1000, the external electronic device 2000 may execute the application for the remote control of the camera immediately without outputting a notification message "Starting camera for remote capture". For example, upon executing the application for the remote control of the camera, the external electronic device 2000 may receive a preview image from the electronic device 1000 and display a Graphical User Interface (GUI) for the remote control of the camera on a screen of the external electronic device 2000 along with the preview image.

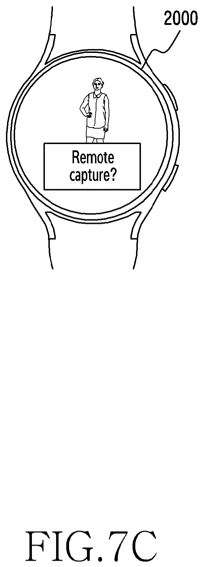

FIG. 7C illustrates an example in which an electronic device according to an embodiment of the disclosure transmits a preview image, thereby causing a notification regarding remote control of a camera to be displayed on an external electronic device.

Referring to FIG. 7C, the external electronic device 2000 which has received a remote control request of the camera from the electronic device 1000 may output, for example, the preview image received from the electronic device 1000 and a text-format message "Remote capture?". In this case, the electronic device 1000 may push the preview image and text-format data requesting the remote control of the camera to the external electronic device 2000, and the external electronic device 2000 may automatically display the preview image and text-format data pushed to the external electronic device 2000 on a screen of the external electronic device 2000 in response to a request received from the electronic device 1000.

It has been described above that the external electronic device 2000 displays the text-format message, the execution screen of the application for the remote control, and the preview image, but the disclosure is not limited thereto. For example, the external electronic device 2000 may output a voice-format notification message or produce a vibration for indicating a request of the remote control.

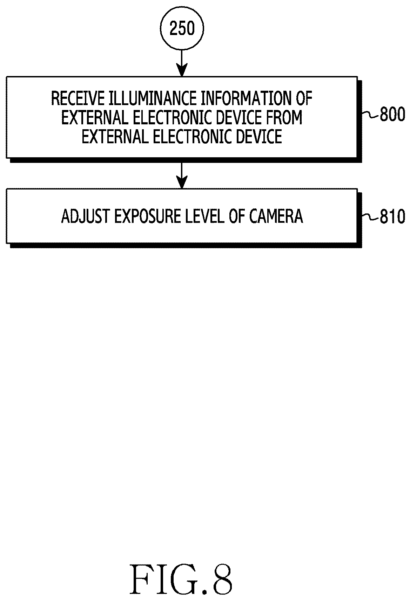

FIG. 8 is a flowchart of a method in which an electronic device according to an embodiment of the disclosure receives illuminance information from an external electronic device to adjust an exposure level of a camera. Operations of FIG. 8 may be performed after the operation 250 of FIG. 2.

In operation 800, the electronic device 1000 may receive illuminance information of the external electronic device 2000 from the external electronic device 2000. According to a request from the electronic device 1000 to remotely control a camera, the external electronic device 2000 may execute an application for the remote control of the camera. Subsequently, the external electronic device 2000 may use an illuminance sensor in the external electronic device 2000 to measure illuminance around the external electronic device 2000, thereby producing the illuminance information. For example, the external electronic device 2000 may measure the illuminance when the illuminance sensor of the external electronic device 2000 is oriented in a pre-set direction. For example, when the external electronic device 2000 is a watch-type electronic device and the illuminance sensor faces the sky, the external electronic device 2000 may use the illuminance sensor to measure the illuminance around the external electronic device 2000. For example, the external electronic device 2000 may measure the illuminance around the external electronic device 2000 according to a pre-set cycle. In addition, the external electronic device 2000 may transmit the illuminance information to the electronic device 1000. The external electronic device 2000 may receive the illuminance information of the electronic device 1000 from the electronic device 1000. When the illuminance information of the electronic device 1000 differs from the illuminance information of the external electronic device 2000 by more than a threshold, the external electronic device 2000 may transmit the illuminance information of the external electronic device 2000 to the electronic device 1000.

In operation 810, the electronic device 1000 may adjust an exposure level of the camera of the electronic device 1000, based on the illuminance information received from the external electronic device 2000. For example, when surroundings of the external electronic device 2000 are brighter than those of the electronic device 1000, the electronic device 1000 may adjust an exposure value of the camera to a lower level. For example, when the surroundings of the external electronic device 2000 are darker than those of the electronic device 1000, the electronic device 1000 may adjust the exposure value of the camera to a higher level. However, examples of adjusting the camera exposure are not limited thereto.

According to an embodiment, the electronic device 1000 may automatically adjust the exposure level of the camera, in response to receiving the illuminance information from the external electronic device 2000. The electronic device 1000 may transmit a preview image captured according to the adjusted exposure level to the external electronic device 2000. While transmitting the preview image captured according to the adjusted exposure level to the external electronic device 2000, the electronic device 1000 may also transmit information indicating that the exposure level of the camera has been automatically adjusted by the electronic device 1000. Upon receiving the information indicating that the exposure level of the camera has been automatically adjusted by the electronic device 1000, the external electronic device 2000 may display on a screen of the external electronic device 2000 a GUI for remotely adjusting the exposure level of the camera.

According to an embodiment, the electronic device 1000 may determine an exposure level to be adjusted for the camera, in response to receiving the illuminance information from the external electronic device 2000, and may also recommend the adjustment of the exposure level to the external electronic device 2000.

Accordingly, even when a place where the electronic device 1000 is located and a place where the external electronic device 2000 is located have different illuminance levels, the exposure value of the camera of the electronic device 1000 may be effectively adjusted, thereby allowing the user to acquire a clear image with appropriate brightness.

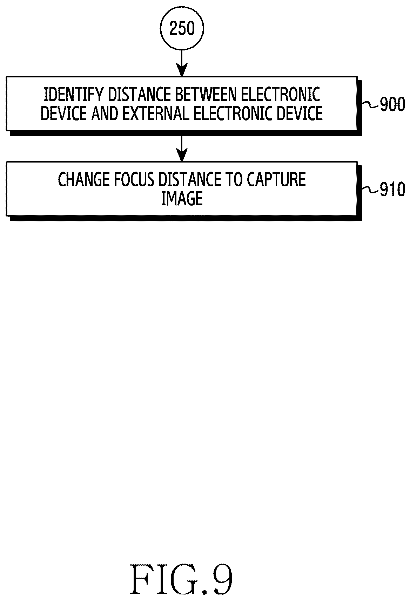

FIG. 9 is a flowchart of a method in which an electronic device according to an embodiment of the disclosure changes a focus distance for capturing, based on a distance to an external electronic device. Operations of FIG. 9 may be performed after the operation 250 of FIG. 2.

In operation 900, the electronic device 1000 may identify a distance between the electronic device 1000 and the external electronic device 2000. The electronic device 1000 may be coupled to the external electronic device 2000 through short-range wireless communication, and the electronic device 1000 may measure strength of signals transmitted and received through the short-range wireless communication to identify the distance between the electronic device 1000 and the external electronic device 2000. For example, the electronic device 1000 may be coupled to the external electronic device 2000 through Bluetooth communication or Wi-Fi direct communication, and may identify the distance between the electronic device 1000 and the external electronic device 2000, based on signal strength of signals to be transmitted and received. In this case, for example, the electronic device 1000 may use an RSSI value to identify the distance between the electronic device 1000 and the external electronic device 2000.

Alternatively, for example, the electronic device 1000 may use UWB communication technologies to identify the distance to the external electronic device 2000. In this case, for example, the electronic device 1000 may transmit and receive wideband signals to and from the external electronic device 2000 through UWB communication to identify the distance between the electronic device 1000 and the external electronic device 2000 by using distance measurement technologies based on a ToF scheme.

In operation 910, the electronic device 1000 may change a focus distance for capturing. The electronic device 1000 may change a focus distance of the camera of the electronic device 1000 according to the distance between the electronic device 1000 and the external electronic device 2000. Since the distance between the electronic device 1000 and the external electronic device 2000 is substantially the same as the distance between the electronic device 1000 and a user wearing the external electronic device 2000, the electronic device 1000 may accurately set the focus distance of a place where the user is located in a preview image, by adjusting the focus distance of the camera of the electronic device 1000, based on the distance between the electronic device 1000 and the external electronic device 2000.

According to an embodiment, the electronic device 1000 may automatically adjust the focus distance of the camera, in response to receiving distance information from the external electronic device 2000. The electronic device 1000 may transmit a preview image captured based on the adjusted focus distance to the external electronic device 2000. While transmitting the preview image captured based on the adjusted focus distance to the external electronic device 2000, the electronic device 1000 may also transmit to the external electronic device 2000 information indicating that the focus distance of the camera has been automatically adjusted by the electronic device 1000. Upon receiving the information indicating that the focus distance of the camera has been automatically adjusted by the electronic device 1000, the external electronic device 2000 may display on a screen of the external electronic device 2000 a GUI for remotely adjusting the focus distance of the camera.

According to an embodiment, in response to receiving the distance information from the external electronic device 2000, the electronic device 1000 may determine the focus distance to be adjusted for the camera, and may also recommend the adjustment of the focus distance to the external electronic device 2000.

According to an embodiment, the electronic device 1000 may compare a motion pattern of the electronic device 1000, detected by a motion sensor of the electronic device 1000, with a motion pattern of a subject in an image captured by the camera, and may adjust a focus distance for capturing when an autofocusing function operates based on the comparison result. For example, the electronic device 1000 may determine whether the motion pattern of the electronic device 1000, detected by the motion sensor, is substantially the same as the motion pattern of the subject in the image captured by the camera. In addition, when the motion pattern of the electronic device 1000, detected by the motion sensor, is determined to be substantially the same as the motion pattern of the subject in the image captured by the camera, the electronic device 1000 may enable the autofocusing function, and may perform at least the operation 910 upon enabling the autofocusing function.

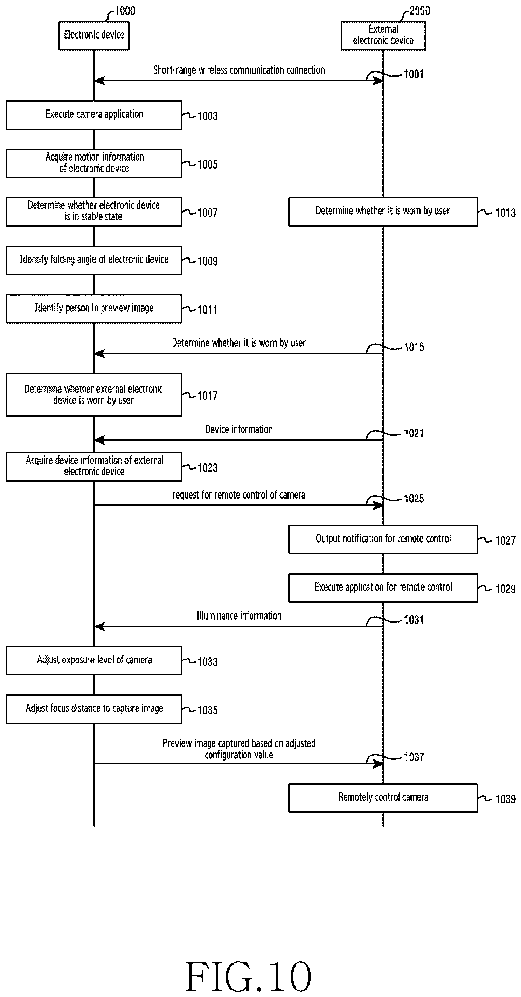

FIG. 10 is a flowchart of operations performed between an electronic device according to an embodiment of the disclosure and an external electronic device to remotely control a camera of the electronic device.

In operation 1000, an electronic device 1000 and an external electronic device 2000 may be coupled through short-range wireless communication. The electronic device 1000 and the external electronic device 2000 may communicate with each other through at least one of Bluetooth communication, Wi-Fi direct communication, and UWB communication, but the disclosure is not limited thereto.

In operation 1003, the electronic device 1000 may execute a camera application. The electronic device 1000 may receive a user input to execute the camera application from a user, and may execute the camera application in response to the user input. The camera application may be an application which provides a function of capturing a subject using at least one camera of the electronic device 1000.

In operation 1005, the electronic device 1000 may acquire motion information. The electronic device 1000 may acquire motion information related to a motion of the electronic device 1000, detected by a motion sensor in the electronic device 1000. The motion sensor may include, for example, an accelerometer, a gyro sensor, and a geomagnetic sensor, but is not limited thereto.

In operation 1007, the electronic device 1000 may determine whether it is in a stable state. The electronic device 1000 may determine whether a shaking state of the electronic device 1000 is the stable state. The shaking state of the electronic device 1000 may refer to a state of the electronic device 1000 as to whether the electronic device 1000 is shaking. In addition, a state in which the electronic device 1000 is not moving and not shaking may be the stable state. For example, when the electronic device 1000 is placed on a surface and not moving, the shaking state of the electronic device 1000 may be determined to be the stable state. For example, when the electronic device 1000 is fixed to a stationary device, such as a tripod, and thus does not move, the shaking state of the electronic device 1000 may be determined to be the stable state. For example, when the electronic device 1000 is mounted on a cradle and thus does not move, the shaking state of the electronic device 1000 may be determined to be the stable state.

In operation 1009, the electronic device 1000 may identify a folding angle of the electronic device 1000. In this case, the electronic device 1000 may be a foldable electronic device, and the folding angle may indicate a degree to which the foldable electronic device is folded by a hinge. For example, the electronic device 1000 may identify the folding angle, which represents the degree to which the electronic device 1000 is folded, by using at least one sensor in the electronic device 1000.

In operation 1011, the electronic device 1000 may identify a person in a preview image. The electronic device 1000 may acquire information on the person in the preview image through image analysis for the preview image. For example, the electronic device 1000 may identify the number of people in the preview image and a size of a region occupied by the person in the preview image. For example, the electronic device 1000 may acquire information on the person in the preview image by using an artificial intelligence model which is trained for identifying a person in an image and obtaining a variety of information on the person in the image, but the disclosure is not limited thereto.

In operation 1013, the external electronic device 2000 may determine whether the external electronic device 2000 is worn by the user. The external electronic device 2000 may be a wearable electronic device, and the external electronic device 2000 may determine whether the external electronic device 2000 is worn by the user by using a sensor in the external electronic device 2000. In addition, the external electronic device 2000 may produce wearing information indicating whether the external electronic device 2000 is worn by the user. For example, upon the camera application being executed, the electronic device 1000 may request the external electronic device 2000 to provide the wearing information, and the external electronic device 2000 may produce the wearing information in response to the request from the electronic device 1000. However, a timing at which the electronic device 1000 requests the external electronic device 2000 to provide the wearing information and a timing at which the external electronic device 2000 produces the wearing information are not limited thereto.

In operation 1015, the external electronic device 2000 may transmit the wearing information to the electronic device 1000. Upon the camera application being executed, the electronic device 1000 may request the external electronic device 2000 to provide the wearing information, and the external electronic device 2000 may transmit the wearing information to the electronic device 1000 in response to the request from the electronic device 1000. However, a timing at which the electronic device 1000 requests the external electronic device 2000 to provide the wearing information and a timing at which the external electronic device 2000 provides the wearing information to the electronic device 1000 are not limited thereto.

In operation 1017, the external electronic device 2000 may determine whether the external electronic device 2000 is worn by the user. The electronic device 1000 may determine whether the external electronic device 2000 is worn by the user, based on the wearing information received from the external electronic device 2000.

The operations 1013 to 1017 may be performed when the external electronic device 2000 is a wearable electronic device. When the external electronic device 2000 is not the wearable electronic device, the performing of the operations 1013 to 1017 may be omitted.

According to an embodiment, when the external electronic device 2000 is not the wearable electronic device, for example, the external electronic device 2000 may produce information indicating whether the external electronic device 2000 is being held by the user and provide the produced information to the electronic device 1000. The electronic device 1000 may determine whether the external electronic device 2000 is being held by the user. When the external electronic device 2000 is held by the user, it may be determined that there is a user's intent to remotely control the camera of the electronic device 1000.

In operation 1021, the external electronic device 2000 may provide device information to the electronic device 1000. In operation 1023, the electronic device 1000 may acquire device information of the external electronic device 2000. Upon the camera application being executed, the electronic device 1000 may request the external electronic device 2000 to provide the device information, and may receive the device information from the external electronic device 2000. However, a timing at which the electronic device 1000 requests the external electronic device 2000 to provide the wearing information is not limited thereto. The device information of the external electronic device 2000 may include, for example, a model name of the external electronic device 2000, an IMEI number, a manufacturer, an operating system, version information, screen resolution, and identification values of applications installed on the external electronic device 2000, but the disclosure is not limited thereto.

In operation 1025, the electronic device 1000 may request the external electronic device 2000 to remotely control the camera. The electronic device 1000 may determine whether to request the external electronic device 2000 to perform the remote control by using the information identified and acquired in the operations 1003 to 1023. The electronic device 1000 may determine whether to request the external electronic device 2000 to remotely control the camera by considering whether the electronic device 1000 is not shaking, the folding angle of the electronic device 1000, information on the identified person in the preview image, whether the external electronic device 2000 is worn by the user, the distance between the electronic device 1000 and the external electronic device 2000, and whether the external electronic device 2000 supports the remote control.

The electronic device 1000 may determine data to be transmitted to the external electronic device 2000 for requesting the remote control, based on device information of the external electronic device 2000. The data to be transmitted to the external electronic device 2000 to request the remote control of the camera may include, for example, at least one of a text message, an execution command of an application for the remote control of the camera, and a preview image, but the disclosure is not limited thereto.

In operation 1027, the external electronic device 2000 may output a notification for the remote control. In operation 1029, the external electronic device 2000 may execute the application for remote control. The external electronic device 2000 may output at least one of a text-format message and a preview image, but the disclosure is not limited thereto. The external electronic device 2000 may execute the application for the remote control and display the execution screen of the executed application. When the electronic device 1000 has execution permission of the application for the remote control in the external electronic device 2000, the external electronic device 2000 may execute the application for the remote control according to the execution command received from the electronic device 1000. When the electronic device 1000 does not have execution permission of the application for the remote control in the external electronic device 2000, the external electronic device 2000 may execute the application for the remote control according to a user input accepting the remote control request.

In operation 1031, the external electronic device 2000 may transmit illuminance information to the electronic device 1000. The external electronic device 2000 may use an illuminance sensor in the external electronic device 2000 to measure illuminance around the external electronic device 2000, thereby producing the illuminance information. For example, the external electronic device 2000 may measure the illuminance when the illuminance sensor of the external electronic device 2000 is oriented in a pre-set direction. For example, when the external electronic device 2000 is a watch-type electronic device and the illuminance sensor faces the sky, the external electronic device 2000 may use the illuminance sensor to measure the illuminance around the external electronic device 2000. For example, the external electronic device 2000 may measure the illuminance around the external electronic device 2000 according to a pre-set cycle. In addition, the external electronic device 2000 may transmit the illuminance information to the electronic device 1000.

In operation 1033, the electronic device 1000 may adjust an exposure level of the camera. For example, when surroundings of the external electronic device 2000 are brighter than those of the electronic device 1000, the electronic device 1000 may adjust an exposure value of the camera to a lower level. For example, when the surroundings of the external electronic device 2000 are darker than those of the electronic device 1000, the electronic device 1000 may adjust the exposure value of the camera to a higher level. However, examples of adjusting the camera exposure are not limited thereto.

In operation 1035, the electronic device 1000 may adjust a focus distance for capturing. The electronic device 1000 may change a focus distance of the camera of the electronic device 1000 according to the distance between the electronic device 1000 and the external electronic device 2000. The electronic device 1000 may identify the distance between the electronic device 1000 and the external electronic device 2000, and may change the focus distance of the camera of the electronic device 1000 according to the distance between the electronic device 1000 and the external electronic device 2000.

In operation 1037, the electronic device 1000 may transmit a preview image captured based on an adjusted configuration value to the external electronic device 2000. The electronic device 1000 may transmit a preview image captured based on the exposure level adjusted in the operation 1033 and the focus distance adjusted in the operation 1035 to the external electronic device 2000. In this case, the electronic device 1000 may provide the external electronic device 2000 with information indicating that at least one of the exposure level or the focus distance has been adjusted.

In operation 1039, the external electronic device 2000 may remotely control the camera. The external electronic device 2000 may display the preview image received from the electronic device 1000 and control the camera of the electronic device 1000 by using a GUI included in the execution screen of the application running on the external electronic device 2000. For example, the external electronic device 2000 may control operations such as image capture control, zoom settings, and timer settings for the camera of the electronic device 1000 through the application running on the external electronic device 2000, but the disclosure is not limited thereto.

According to an embodiment, upon receiving from the electronic device 1000 the information indicating that at least one of the exposure level and the focus distance has been adjusted, the external electronic device 2000 may automatically display on a screen of the external electronic device 2000 a GUI for adjusting at least one of the exposure level and the focus distance of the camera.

According to an embodiment, the external electronic device 2000 may remotely control the camera of the electronic device 1000, based on the user input received for the application executed for the remote control of the camera. For example, the external electronic device 2000 may remotely control the camera of the electronic device 1000 according to a user's touch input or a user's gesture input. The user's gesture input may be a user input for moving the external electronic device 2000. In addition, for example, when a motion level of the external electronic device 2000 decreases below a predetermined threshold, the external electronic device 2000 may transmit to the electronic device 1000 a control command for capturing through the camera.

Meanwhile, although the operation in which the electronic device 1000 identifies the distance to the external electronic device 2000 is omitted in FIG. 10, the operation in which the electronic device 1000 identifies the distance to the external electronic device 2000 may be added. In this case, the electronic device 1000 may measure strength of signals transmitted and received through the short-range wireless communication to identify the distance between the electronic device 1000 and the external electronic device 2000. Alternatively, for example, the electronic device 1000 may use UWB communication technologies to identify the distance to the external electronic device 2000.

According to an embodiment of the disclosure, a method in which an electronic device requests an external electronic device to perform remote control for image capturing may include: executing a camera application for capturing by using at least one camera of the electronic device; upon the camera application being executed, acquiring motion information of the electronic device from a motion sensor of the electronic device; identifying a shaking state of the electronic device, based on the motion information; upon the shaking state of the electronic device being identified as a stable state, identifying a distance between the electronic device and the external electronic device; and upon the distance between the electronic device and the external electronic device exceeding a threshold, requesting the external electronic device to remotely control the camera of the electronic device.

For example, the operation of identifying the distance may identify the distance based on strength of a signal transmitted and received through Bluetooth communication between the electronic device and the external electronic device.

For example, the electronic device may be a foldable device. The method may further include identifying a folding angle when the electronic device is in a folded state. The operation of requesting the remote control for the camera may request the external electronic device to remotely control the camera of the electronic device, upon the folding angle falling within a predetermined range.

For example, the method may further include identifying a person in a preview image acquired through the camera. The operation of requesting the remote control for the camera may request the external electronic device to remotely control the camera, upon the person being identified in the preview image.

For example, the operation of requesting the remote control for the camera may request the external electronic device to remotely control the camera, based on the number of people in the preview image and/or a size of a region occupied by the person in the preview image.

For example, the external electronic device may be a wearable device. The method may further include receiving, from the external electronic device, wearing information indicating whether the external electronic device is worn by a user. The operation of requesting the remote control for the camera may request the external electronic device to remotely control the camera, upon the external electronic device being determined to be worn by the user based on the wearing information from the external electronic device.

For example, the method may further include receiving device information of the external electronic device from the external electronic device. The operation of requesting the remote control for the camera may transmit to the external electronic device at least one of a message for requesting the remote control of the camera, the preview image, and an execution command of an application for the remote control of the camera, based on the device information.

For example, the method may further include: receiving, from the external electronic device, illuminance information measured by the external electronic device; and adjusting an exposure value of the camera for the image capturing, based on the illuminance information.

For example, the illuminance information may be detected by the external electronic device, when a direction of an illuminance sensor of the external electronic device is oriented in a pre-set direction.

For example, the method may further include changing a focus distance for the image capturing, based on the distance between the electronic device and the external electronic device.

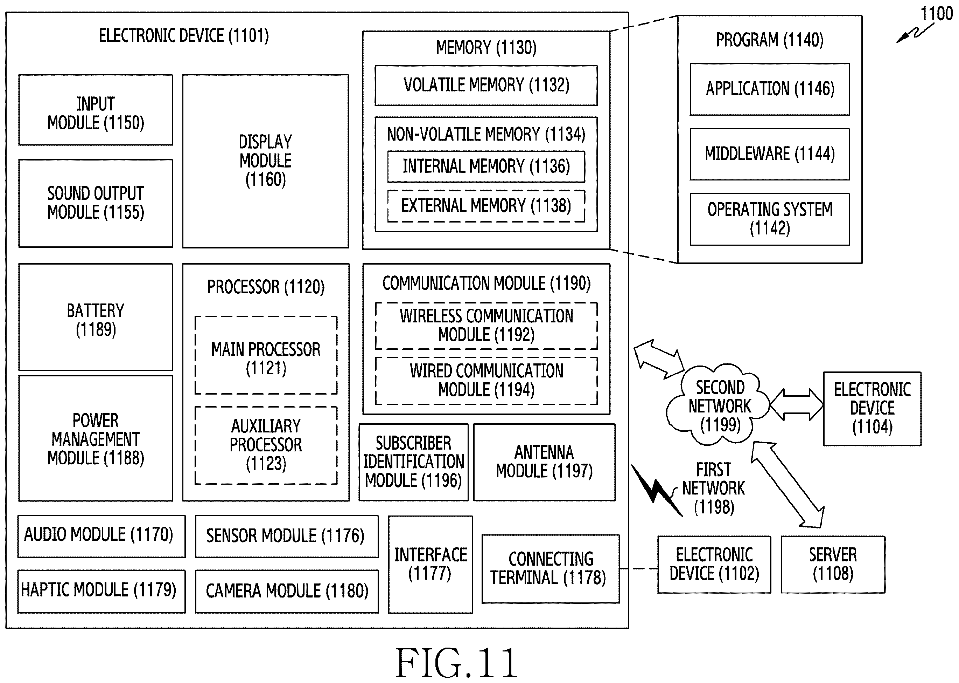

FIG. 11 is a block diagram illustrating an electronic device 1101 in a network environment 1100 according to various embodiments. Referring to FIG. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thererto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

The electronic device 1101 of FIG. 11 may be a first device 1000 or a second device 2000.

According to an embodiment, when the electronic device 1101 of FIG. 11 is the electronic device 1000, the electronic device 1101 may perform the operation of the electronic device 1000 in FIG. 1 to FIG. 10.

When the electronic device 1101 is the electronic device 1000, the processor 1120 may control the communication module 1190 so that the electronic device 1000 and the external electronic device 2000 are coupled through short-range wireless communication. The electronic device 1000 and the external electronic device 2000 may be communicatively coupled with each other through at least one of Bluetooth communication and UWB communication, but the disclosure is not limited thereto. The processor 1120 may execute a camera application. The processor 1120 may receive a user input for executing the camera application from a user, and may execute the camera application in response to the user input. The camera application may be an application which provides a function of capturing a subject by using at least one camera of the electronic device 1000.

The processor 1120 may acquire motion information. The processor 1120 may acquire motion information related to a motion of the electronic device 1000, which is detected from a motion sensor in the electronic device 1000. The motion sensor may be included in the sensor module 1176. The motion sensor may include, for example, an accelerometer, a gyro sensor, and a geomagnetic sensor, but is not limited thereto.

The processor 1120 may determine whether the electronic device 1000 is in a stable state. The processor 1120 may determine whether a shaking state of the electronic device 1000 is the stable state. For example, when the electronic device 1000 is placed on a surface and not moving, the shaking state of the electronic device 1000 may be determined to be the stable state. For example, when the electronic device 1000 is fixed to a stationary device, such as a tripod, and thus does not move, the shaking state of the electronic device 1000 may be determined to be the stable state. For example, when the electronic device 1000 is mounted on a cradle and thus does not move, the shaking state of the electronic device 1000 may be determined to be the stable state.

The processor 1120 may identify a folding angle of the electronic device 1000. In this case, the electronic device 1000 may be a foldable electronic device, and the folding angle may indicate a degree to which the foldable electronic device is folded by a hinge. For example, the electronic device 1000 may identify the folding angle, which represents the degree to which the electronic device 1000 is folded, by using at least one sensor in the electronic device 1000. The at least one sensor for identifying the folding angle may be included in the sensor module 1176.

The processor 1120 may identify a person in a preview image. The processor 1120 may acquire information on the person in the preview image through image analysis for the preview image. For example, the processor 1120 may identify the number of people in the preview image and a size of a region occupied by the person in the preview image. For example, the processor 1120 may acquire information on the person in the preview image by using an artificial intelligence model which is trained for identifying a person in an image and obtaining a variety of information on the person in the image, but the disclosure is not limited thereto.

The processor 1120 may determine whether the external electronic device 2000 is worn by the user. The processor 1120 may determine whether the external electronic device 2000 is worn by the user, based on wearing information received from the external electronic device 2000.

The processor 1120 may identify a distance to the external electronic device 2000. The processor 1120 may measure strength of signals transmitted and received through short-range wireless communication to identify the distance between the electronic device 1000 and the external electronic device 2000. For example, the processor 1120 may identify the distance between the electronic device 1000 and the external electronic device 2000, based on signal strength of Bluetooth signals between the electronic device 1000 and the external electronic device 2000. In this case, the processor 1120 may use an RSSI value to identify the distance between the electronic device 1000 and the external electronic device 2000.

Alternatively, for example, the processor 1120 may use a UWB communication technology to identify the distance to the external electronic device 2000. In this case, the processor 1120 may identify the distance between the electronic device 1000 and the external electronic device 2000 by mutually transmitting and receiving broadband signals with respect to the external electronic device 2000 through UWB communication.

The processor 1120 may acquire device information of the external electronic device 2000. Upon the camera application being executed, the processor 1120 may request the external electronic device 2000 to provide the device information, and may receive the device information from the external electronic device 2000. However, a timing at which the processor 1120 requests the external electronic device 2000 to provide the wearing information is not limited thereto. The device information of the external electronic device 2000 may include, for example, a model name of the external electronic device 2000, an IMEI number, a manufacturer, an operating system, version information, screen resolution, and identification values of applications installed on the external electronic device 2000, but the disclosure is not limited thereto.

The processor 1120 may request the external electronic device 2000 to remotely control the camera. The processor 1120 may determine whether to request the external electronic device 2000 to perform the remote control by using the information identified and acquired in the operations 1003 to 1023. The processor 1120 may determine whether to request the external electronic device 2000 to remotely control the camera by considering whether the electronic device 1000 is not shaking, the folding angle of the electronic device 1000, information on the identified person in the preview image, whether the external electronic device 2000 is worn by the user, the distance between the electronic device 1000 and the external electronic device 2000, and whether the external electronic device 2000 supports the remote control.

The processor 1120 may determine data to be transmitted to the external electronic device 2000 for requesting the remote control, based on device information of the external electronic device 2000. The data to be transmitted to the external electronic device 2000 to request the remote control of the camera may include, for example, at least one of a text message, an execution command of an application for the remote control of the camera, and a preview image, but the disclosure is not limited thereto.

The processor 1120 may receive illuminance information from the external electronic device 2000 and adjust the exposure level of the camera. For example, when surroundings of the external electronic device 2000 are brighter than those of the electronic device 1000, the processor 1120 may adjust the exposure value of the camera to a lower level. For example, when the surroundings of the external electronic device 2000 are darker than those of the electronic device 1000, the processor 1120 may adjust the exposure value of the camera to a higher level. However, examples of adjusting the camera exposure are not limited thereto.

The processor 1120 may adjust a focus distance for capturing. The processor 1120 may change a focus distance of the camera of the electronic device 1000 according to the distance between the electronic device 1000 and the external electronic device 2000.

The processor 1120 may transmit a preview image captured based on an adjusted configuration value to the external electronic device 2000. The processor 1120 may transmit a preview image captured based on the exposure level adjusted in the operation 1033 and the focus distance adjusted in the operation 1035 to the external electronic device 2000. In this case, the processor 1120 may provide the external electronic device 2000 with information indicating that at least one of the exposure level or the focus distance has been adjusted.

According to an embodiment, when the electronic device 1101 of FIG. 11 is the external electronic device 2000, the electronic device 1101 may perform the operations of the external electronic device 2000 in FIG. 1 to FIG. 10.

When the electronic device 1101 is the external electronic device 2000, the processor 1120 of the external electronic device 2000 may control the communication module 1190 so that the electronic device 1000 and the external electronic device 2000 are coupled through short-range wireless communication. The electronic device 1000 and the external electronic device 2000 may be communicatively coupled with each other through at least one of Bluetooth communication and UWB communication, but the disclosure is not limited thereto. The processor 1120 may determine whether the external electronic device 2000 is worn by the user. The external electronic device 2000 may be a wearable electronic device, and the processor 1120 may determine whether the external electronic device 2000 is worn by the user by using a sensor in the external electronic device 2000. In addition, the processor 1120 may produce the wearing information indicating whether the external electronic device 2000 is worn by the user. For example, upon the camera application being executed, the electronic device 1000 may request the external electronic device 2000 to provide the wearing information, and the processor 1120 may produce the wearing information in response to the request from the electronic device 1000. However, a timing at which the electronic device 1000 requests the external electronic device 2000 to provide the wearing information and a timing at which the processor 1120 produces the wearing information are not limited thereto.

The processor 1120 may transmit the wearing information to the electronic device 1000. Upon the camera application being executed, the electronic device 1000 may request the external electronic device 2000 to provide the wearing information, and the processor 1120 may transmit the wearing information to the electronic device 1000 in response to the request from the electronic device 1000. However, a timing at which the electronic device 1000 requests the external electronic device 2000 to provide the wearing information and a timing at which the processor 1120 provides the wearing information to the electronic device 1000 are not limited thereto.

The processor 1120 may output a notification for remote control, and may execute an application for the remote control. The processor 1120 may output at least one of a text-format message and a preview image, but the disclosure is not limited thereto. The processor 1120 may execute the application for the remote control and display the execution screen of the executed application. When the electronic device 1000 has execution permission of the application for the remote control in the external electronic device 2000, the processor 1120 may execute the application for the remote control according to the execution command received from the electronic device 1000. When the electronic device 1000 does not have execution permission of the application for the remote control in the external electronic device 2000, the processor 1120 may execute the application for the remote control according to a user input accepting the remote control request.

The processor 1120 may transmit the illuminance information to the electronic device 1000. The processor 1120 may use an illuminance sensor in the external electronic device 2000 to measure illuminance around the external electronic device 2000, thereby producing the illuminance information. For example, the processor 1120 may measure the illuminance when the illuminance sensor of the external electronic device 2000 is oriented in a pre-set direction. For example, when the external electronic device 2000 is a watch-type electronic device and the illuminance sensor faces the sky, the processor 1120 may use the illuminance sensor to measure the illuminance around the external electronic device 2000. For example, the processor 1120 may measure the illuminance around the external electronic device 2000 according to a pre-set cycle. In addition, the processor 1120 may transmit the illuminance information to the electronic device 1000.

The processor 1120 may remotely control the camera. The processor 1120 may display the preview image received from the electronic device 1000 and control the camera of the electronic device 1000 by using a GUI included in the execution screen of the application running on the external electronic device 2000.

Upon receiving from the electronic device 1000 the information indicating that at least one of the exposure level and the focus distance has been adjusted, the processor 1120 may automatically display on a screen of the external electronic device 2000 a GUI for adjusting at least one of the exposure level and the focus distance of the camera.

The processor 1120 may remotely control the camera of the electronic device 1000, based on the user input received for the application executed for the remote control of the camera. For example, the processor 1120 may remotely control the camera of the electronic device 1000 according to a user's touch input or a user's gesture input. The user's gesture input may be a user input for moving the external electronic device 2000. In addition, for example, when a motion level of the external electronic device 2000 decreases below a predetermined threshold, the processor 1120 may transmit to the electronic device 1000 a control command for capturing through the camera.

According to an embodiment, an electronic device for requesting an external electronic device to perform remote control for image capturing may include: a communication interface, at least one camera, a memory which stores instructions, and a processor which executes the instructions. The processor may be configured, by executing the instructions, to: execute a camera application for capturing by using the at least one camera; upon the camera application being executed, acquire motion information of the electronic device from the motion sensor, identify a shaking state of the electronic device, based on the motion information; upon the shaking state of the electronic device being identified as a stable state, identify a distance between the electronic device and the external electronic device; and upon the distance between the electronic device and the external electronic device exceeding a threshold, request the external electronic device to remotely control the camera of the electronic device.

For example, the processor may be configured, by executing the instructions, to identify the distance based on strength of a signal transmitted and received through Bluetooth communication between the electronic device and the external electronic device.

For example, the electronic device may be a foldable device. The processor may be configured, by executing the instructions, to: identify a folding angle when the electronic device is in a folded state; and upon the folding angle falling within a predetermined range, request the external electronic device to remotely control the camera.

For example, the processor may be configured, by executing the instructions, to: identify a person in a preview image acquired through the camera; and upon the person being identified in the preview image, request the external electronic device to remotely control the camera.

For example, the processor may be configured, by executing the instructions, to request the external electronic device to remotely control the camera, based on the number of people in the preview image and/or a size of a region occupied by the person in the preview image.

For example, the external electronic device may be a wearable device. The processor may be configured, by executing the instructions, to: receive, from the external electronic device, wearing information indicating whether the external electronic device is worn by a user; and upon the external electronic device being determined to be worn by the user based on the wearing information from the external electronic device, request the external electronic device to remotely control the camera.

For example, the processor may be configured, by executing the instructions, to: receive device information of the external electronic device from the external electronic device; and transmit to the external electronic device at least one of a message for requesting the remote control of the camera, the preview image, and an execution command of an application for the remote control of the camera, based on the device information.

For example, the processor may be configured, by executing the instructions, to: receive, from the external electronic device, illuminance information measured by the external electronic device; and adjust an exposure value of the camera for the image capturing, based on the illuminance information.

For example, the illuminance information may be detected by the external electronic device, when a direction of an illuminance sensor of the external electronic device is oriented in a pre-set direction.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method of an electronic device for requesting an external electronic device to perform remote control for image capturing, the method comprising:
executing a camera application for capturing by using at least one camera of the electronic device;
upon the camera application being executed, identifying a folding state of the electronic device, the folding state including a folding angle when the electronic device is in a folded state; and
upon the folding angle falling within a predetermined range, requesting the external electronic device to remotely control the camera of the electronic device.

2. The method of claim 1, further comprising
identifying a distance between the electronic device and the external electronic device,
wherein the requesting the remote control comprises, upon the distance between the electronic device and the external electronic device exceeding a threshold, requesting the external electronic device to remotely control the camera of the electronic device.

3. The method of claim 1, further comprising:
upon the camera application being executed, acquiring motion information of the electronic device from a motion sensor of the electronic device; and
identifying a shaking state of the electronic device, based on the motion information,
wherein the requesting the remote control for the camera comprises, upon the shaking state of the electronic device being identified as a stable state, requesting the external electronic device to remotely control the camera.

4. The method of claim 1, further comprising
identifying a person in a preview image acquired through the camera,
wherein the requesting the remote control for the camera comprises, upon the person being identified in the preview image, requesting the external electronic device to remotely control the camera.

5. The method of claim 4, wherein the requesting the remote control for the camera comprises requesting the external electronic device to remotely control the camera, based on the number of people in the preview image and/or a size of a region occupied by the person in the preview image.

6. The method of claim 1,
wherein the external electronic device is a wearable device, and the method further comprises receiving, from the external electronic device, wearing information indicating whether the external electronic device is worn by a user, and
wherein the requesting the remote control for the camera comprises, upon the external electronic device being determined to be worn by the user based on the wearing information from the external electronic device, requesting the external electronic device to remotely control the camera.

7. The method of claim 1, further comprising
receiving device information of the external electronic device from the external electronic device,
wherein the requesting the remote control for the camera comprises transmitting to the external electronic device at least one of a message for requesting the remote control of the camera, the preview image, and an execution command of an application for the remote control of the camera, based on the device information.

8. The method of claim 1, further comprising:
receiving, from the external electronic device, illuminance information measured by the external electronic device; and
adjusting an exposure value of the camera for the image capturing, based on the illuminance information.

9. The method of claim 8, wherein the illuminance information is detected by the external electronic device, when a direction of an illuminance sensor of the external electronic device is oriented in a pre-set direction.

10. The method of claim 8, further comprising
changing a focus distance for the image capturing, based on the distance between the electronic device and the external electronic device.

11. An electronic device for requesting an external electronic device to perform remote control for image capturing, the electronic device comprising:
a communication interface;
at least one camera;
memory which stores instructions; and
a processor which executes the instructions,
wherein the processor is configured, by executing the instructions, to:
execute a camera application for capturing by using the at least one camera;
upon the camera application being executed, identify a folding state of the electronic device, the folding state including a folding angle when the electronic device is in a folded state; and
upon the folding angle falling within a predetermined range, request the external electronic device to remotely control the camera of the electronic device.

12. The electronic device of claim 11, wherein the processor is configured, by executing the instructions, to identify a distance between the electronic device and the external electronic device, and upon the distance between the electronic device and the external electronic device exceeding a threshold, request the external electronic device to remotely control the camera of the electronic device.

13. The electronic device of claim 11, further comprising
at least one motion sensor,
wherein the processor is configured to, by executing the instructions, to acquire motion information of the electronic device from the motion sensor, identify a shaking state of the electronic device, based on the motion information, and upon the shaking state of the electronic device being identified as a stable state, request the external electronic device to remotely control the camera.

14. The electronic device of claim 11, wherein the processor is configured to, by executing the instructions, to:
identify a person in a preview image acquired through the camera; and
upon the person being identified in the preview image, request the external electronic device to remotely control the camera.

15. The electronic device of claim 14, wherein the processor is configured to, by executing the instructions, to request the external electronic device to remotely control the camera, based on the number of people in the preview image and/or a size of a region occupied by the person in the preview image.
